# EUROPEAN PATENT APPLICATION

(11) **EP 4 851 557 A1**
(43) Date of publication of application: **09.12.2026**
(21) Application number: 26182742.2
(22) Date of filing: 02.06.2026
(51) Int. Cl.: F25B 1/10, F25B 49/02

(54) **ENHANCED VAPOR INJECTION REFRIGERATING SYSTEM AND REFRIGERATED TRANSPORT VEHICLE**

(30) Priority: 03.06.2025 CN 202510737262
(71) Applicant: Carrier Corporation, Palm Beach Gardens, FL 33418 (US)
(72) Inventor: TIAN, Hai, Shanghai, 201206 (CN); XIE, Fei, Shanghai, 201206 (CN)
(74) Representative: Dehns

(57) **Abstract**

This application provides an enhanced vapor injection refrigerating system 100 including a compressor 102, a condenser 103, an expansion valve 104, and an evaporator 105, which are sequentially in communication with each other through a refrigerant pipeline 101, an outlet of the evaporator 105 communicates with a first suction port 1021 of the compressor 102, and the enhanced vapor injection refrigerating system 100 further includes: an economizer pipeline 106 branched from the refrigerant pipeline 101 allowing an outlet of the condenser 102 to communicate with the expansion valve 104; an economizer 107 having a primary side 1071 disposed on the economizer pipeline 106 and a secondary side 1072 branched from the refrigerant pipeline 101 allowing the outlet of the condenser 102 to communicate with the expansion valve 104; a stop valve 108 disposed on an outlet pipeline of the primary side 1071 of the economizer 107; a gas-liquid separator 109 having an inlet communicating with the stop valve 108; and a vapor injection pipeline 110 allowing an outlet of the gas-liquid separator 109 to communicate with a second suction port 1022 of the compressor 102. Through the enhanced vapor injection refrigerating system 100, a temperature of a refrigerant entering the evaporator 105 is further reduced, a subcooling degree is increased, and a discharge temperature of the compressor 102 is reduced more economically and conveniently, thereby improving the operation reliability of the compressor 102.

## Description

### TECHNICAL FIELD

This application claims benefit of Chinese Patent Application No.202510737262.4, filed June 3, 2025, and all the benefits accruing therefrom under 35 U.S.C. §119, the contents of which in their entirety are herein incorporated by reference.

### BACKGROUND

This application relates to the field of refrigeration/cooling apparatus, and specifically to an enhanced vapor injection refrigerating system and a refrigerated transport vehicle having the enhanced vapor injection refrigerating system.

In a traditional transport refrigeration system, in order to improve a subcooling degree and control a discharge temperature of a compressor not to be too high, an economizer is used in the refrigeration system. For example, a part of a liquid refrigerant at an outlet of a condenser is usually divided and throttled by an electronic expansion valve (EXV), then introduced into an economizer for heat absorption and evaporation (cooling a refrigerant main flow path at the outlet of the condenser), and finally returned to a vapor injection inlet of the compressor in a low-pressure vapor state, thereby increasing the subcooling degree and reducing the discharge temperature of the compressor.

In the related art, when the economizer is used to improve the subcooling degree and appropriately reduce the discharge temperature of the compressor, an electronic expansion valve needs to be provided at the inlet of the economizer to throttle and control the liquid refrigerant entering the economizer, but the cost of the electronic expansion valve, a pressure and temperature sensor matched with the electronic expansion valve and a controller is high, and the electronic expansion valve needs to be maintained and replaced when the electronic expansion valve fails as a movable component, which also brings problems of high cost.

### SUMMARY

An object of the invention is to provide an enhanced vapor injection refrigerating system to at least resolve or alleviate some of the problems that exist in the related art.

According to a first aspect of the invention there is provided an enhanced vapor injection refrigerating system including a compressor, a condenser, an expansion valve, and an evaporator, which are sequentially in communication with each other through a refrigerant pipeline, an outlet of the evaporator communicates with a first air suction port of the compressor, and the enhanced vapor injection refrigerating system further includes: an economizer pipeline branched from the refrigerant pipeline allowing an outlet of the condenser to communicate with the expansion valve; an economizer having a primary side disposed on the economizer pipeline and a secondary side disposed on the refrigerant pipeline allowing the outlet of the condenser to communicate with the expansion valve; a stop valve disposed on an outlet pipeline of a primary side of the economizer; a gas-liquid separator having an inlet communicating with the stop valve; and a vapor injection pipeline allowing an outlet of the gas-liquid separator to communicate with a second suction port of the compressor.

In one or more embodiments, the economizer is a plate heat exchanger.

In one or more embodiments, the enhanced vapor injection refrigerating system further includes an internal throttle hole internally disposed at an inlet of a primary side of the economizer and integrally formed with the inlet of the primary side of the economizer.

In one or more embodiments, the enhanced vapor injection refrigerating system further includes an external throttle device disposed in the economizer pipeline close to the inlet of the primary side of the economizer.

In one or more embodiments, the stop valve is a solenoid valve or an electric regulating valve configured to control a refrigerant flow at an outlet of the primary side of the economizer.

In one or more embodiments, the enhanced vapor injection refrigerating system further includes a temperature sensor disposed on a discharge pipeline of the compressor and configured to monitor a discharge temperature of the compressor; and a pressure sensor disposed on the discharge pipeline of the compressor corresponding to the temperature sensor and configured to monitor a discharge pressure of the compressor.

In one or more embodiments, the vapor injection pipeline has an inlet located at an upper part of the gas-liquid separator, and is configured to extract the separated vapor refrigerant.

In one or more embodiments, the enhanced vapor injection refrigerating system further includes a liquid level sensor disposed in the gas-liquid separator and configured to monitor a liquid level in the gas-liquid separator.

In one or more embodiments, the enhanced vapor injection refrigerating system further includes an enhanced vapor injection flow control valve disposed in the vapor injection pipeline and configured to adjust an amount of refrigerant vapor injected into the second suction port of the compressor.

In one or more embodiments, a refrigerated transport vehicle having the enhanced vapor injection refrigerating system according to any of the above embodiments is also provided.

### BRIEF DESCRIPTION OF THE SEVERAL VIEWS OF THE DRAWINGS

Certain exemplary embodiments will now be described in greater detail by way of example only and with reference to the accompanying drawings in which:
Fig. 1 is a schematic system diagram of an enhanced vapor injection refrigerating system;
Fig. 2 is a schematic system diagram of the enhanced vapor injection refrigerating system;
Fig. 3 is a schematic structural diagram of an economizer;
Fig. 4 is a schematic system diagram of the enhanced vapor injection refrigerating system;
Fig. 5 is a schematic system diagram of the enhanced vapor injection refrigerating system; and
Fig. 6 is a schematic system diagram of the enhanced vapor injection refrigerating system.

Reference numerals: enhanced vapor injection refrigerating system 100, refrigerant pipeline 101, compressor 102, compressor first suction port 1021, compressor second suction port 1022, compressor discharge pipeline 1023, condenser 103, expansion valve 104, evaporator 105, economizer pipeline 106, economizer 107, economizer primary side 1071, economizer secondary side 1072, internal throttle hole 1073, external throttle device 1074, stop valve 108, gas-liquid separator 109, vapor injection pipeline 110, temperature sensor 111, pressure sensor 112, liquid level sensor 113, enhanced vapor injection flow control valve 114.

### DETAILED DESCRIPTION OF THE DISCLOSURE

It should be noted that working principles, features, advantages, and the like of an enhanced vapor injection refrigerating system and a refrigerated transport vehicle having the enhanced vapor injection refrigerating system according to this application will be explained below by way of embodiments. However, it should be understood that all descriptions are only given for exemplification and therefore these embodiments should not be understood as forming any limitation on this application.

In addition, for any single technical feature described or implicit in the embodiments mentioned herein, or any single technical feature shown or implicit in the drawings, this application still allows any combination or deletion between these technical features (or their equivalents) without any technical obstacles, thereby obtaining other embodiments of the invention that may not be directly mentioned herein.

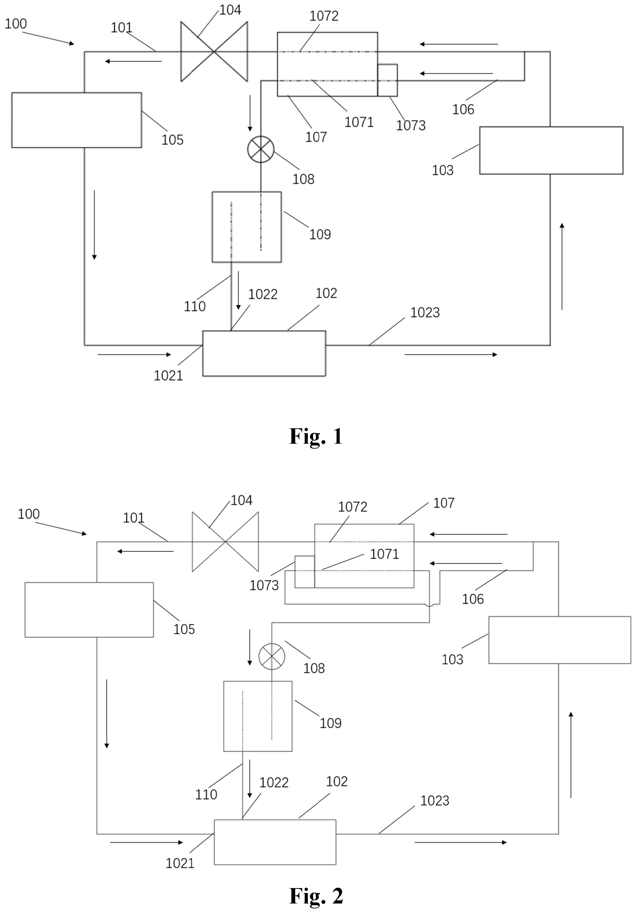

Fig. 1 is a schematic system diagram of an enhanced vapor injection refrigerating system 100 according to one or more embodiments. As shown in Fig. 1, the enhanced vapor injection refrigerating system 100 according to one or more embodiments includes a compressor 102, a condenser 103, an expansion valve 104, an evaporator 105, and a refrigerant pipeline 101 that is sequentially connected to the compressor 102, the condenser 103, the expansion valve 104, the evaporator 105 according to a refrigerant flow direction. The compressor 102 has a compressor first suction port 1021 and a compressor second suction port 1022, and an outlet of the evaporator 105 communicates with the first suction port 1021 of the compressor 102.

As shown in Fig. 1, the refrigerant pipeline 101 is sequentially connected to the compressor 102, the condenser 103, the expansion valve 104, and the evaporator 105 to form a refrigeration circulation loop, and a flow direction of the refrigerant in the refrigeration circulation loop is shown by arrows in Fig. 1. The enhanced vapor injection refrigerating system 100 further includes an economizer pipeline 106 branched from the refrigerant pipeline 101 allowing an outlet of the condenser 103 to communicate with the expansion valve 104, and an economizer 107 having an economizer primary side 1071 disposed on the economizer pipeline 106 and an economizer secondary side 1072 disposed on the refrigerant pipeline 101 allowing the outlet of the condenser 103 to communicate with the expansion valve 104. A part of the refrigerant (mainly liquid refrigerant) at the outlet of the condenser 103 is split through the economizer pipeline 106 and flows into the economizer primary side 1071, and the other part flows into the economizer secondary side 1072 through the outlet pipeline of the condenser 103, and exchanges heat with the liquid refrigerant flowing in the economizer primary side 1071, so that the refrigerant flowing through the economizer secondary side 1072 and further flowing to the expansion valve 104 is further cooled to obtain a higher subcooling degree, and meanwhile, the refrigerant flowing into the economizer primary side 1071 becomes a low-pressure gaseous refrigerant with a lower temperature after heat absorption and evaporation.

It should be noted that the "economizer primary side 1071" in this application refers to a side, that is, an endothermic side, which is a relatively low temperature in the economizer, and the term "economizer secondary side 1072" in this application refers to a side, that is, an exothermic side, which is a higher temperature in the economizer.

A stop valve 108 is further disposed on the outlet pipeline of the economizer primary side 1071, and the on-off of the outlet pipeline of the economizer primary side 1071 can be controlled by opening and closing the stop valve 108. That is, the economizer 107 may be controlled to determine whether the economizer 107 is put into use according to the specific working condition of the enhanced vapor injection refrigerating system 100.

An inlet of the gas-liquid separator 109 communicates with the stop valve 108, and an outlet of the gas-liquid separator 109 is provided with a vapor injection pipeline 110 and communicates with the compressor second suction port 1022 through the vapor injection pipeline 110. When the stop valve 108 is opened, the low-pressure vapor refrigerant with a lower temperature (possibly mixed with a part of liquid refrigerant that is insufficiently evaporated) flowing out of the outlet pipeline of the economizer primary side 1071 flows through the stop valve 108 and then flows to the gas-liquid separator 109, and is subjected to gas-liquid separation in the gas-liquid separator 109, and the separated gaseous refrigerant flows to the compressor second suction port 1022 through the vapor injection pipeline 110, and enters the compressor 102 to relieve the compression temperature rise, thereby achieving the effect of appropriately reducing the discharge temperature of the compressor 102.

In the enhanced vapor injection refrigerating system 100 according to one or more of the above embodiments, after the refrigerant is compressed into the high-temperature and high-pressure refrigerant gas in the compressor 102, the refrigerant is conveyed into the condenser 103 through the refrigerant pipeline 101, the high-temperature and high-pressure refrigerant gas is in heat exchange with an external medium such as water or air in the condenser 103, after the temperature is reduced and the refrigerant is condensed into the refrigerant liquid, a part of the high-pressure refrigerant flowing out of the outlet of the condenser 103 flows to the economizer primary side 1071 through the economizer pipeline 106, and exchanges heat with the refrigerant flowing through the economizer secondary side 1072, so that the liquid refrigerant in the economizer primary side 1071 absorbs heat and evaporates into a low-pressure gaseous refrigerant, and flows through the stop valve 108 through the outlet pipeline of the economizer primary side 1071 and then flows to the gas-liquid separator 109, and the separated low-pressure gaseous refrigerant flows to the compressor second suction port 1022 through the vapor injection pipeline 110.

Another part of the refrigerant flowing out from the outlet of the condenser 103 flows to the economizer secondary side 1072 through the outlet pipeline of the condenser 103, and exchanges heat with the refrigerant flowing through the economizer primary side 1071, so that a temperature of the refrigerant in the economizer secondary side 1072 is further reduced. When the refrigerant liquid cooled by the economizer 107 passes through the expansion valve 104, the pressure is rapidly reduced and expanded into a low-temperature and low-pressure liquid refrigerant, which is conveyed to the evaporator 105 through the refrigerant pipeline 101, and the low-temperature and low-pressure liquid refrigerant exchanges heat with an external heat exchange medium in the evaporator 105 and absorbs heat and evaporates into refrigerant gas.

Through the above embodiments, the economizer 107 is disposed at the outlet of the condenser 103, so that the temperature of the refrigerant entering the evaporator 105 is further reduced, and the subcooling degree is improved, thereby ensuring that the refrigerant completely condenses into a liquid state when flowing out of the economizer secondary side 1072 and obtaining an appropriate subcooling degree, a heat exchange temperature difference between the refrigerant entering the evaporator 105 and the external heat exchange medium is further improved, and the heat exchange efficiency of the evaporator 105 is improved.

In addition, the low-pressure gaseous refrigerant flowing out of the evaporator 105 flows to the compressor first suction port 1021 through the refrigerant pipeline 101, and is compressed in stages with the gaseous refrigerant flowing into the compressor 102 through the compressor second suction port 1022. Since there is low-temperature vapor from the economizer 107 and flowing into the compressor 102 through the compressor second suction port 1022 for staged compression, that is, the low-temperature vapor from the gas-liquid separator 109 enters the compressor second suction port 1022, the compression temperature rise can be effectively reduced, thereby reducing the discharge temperature of the compressor 102 and improving the operation reliability of the compressor 102.

At the same time, the gas-liquid separator 109 is disposed between the economizer primary side 1071 and the compressor second suction port 1022, to avoid the problem that the refrigerant at the outlet of the economizer primary side 1071 cannot be completely evaporated, and the mixed liquid refrigerant enters the compressor 102 to cause liquid slugging of the compressor 102. The gas flow pulsation of the refrigerant is also reduced through the buffer effect of the gas-liquid separator 109, thereby reducing the noise that may be generated due to the gas flow pulsation when the enhanced vapor injection refrigerating system 100 operates.

The stop valve 108 is disposed on the outlet pipeline of the economizer primary side 1071, and the outlet pipeline of the economizer primary side 1071 is cut off by closing the stop valve 108 under a condition that an external environment temperature is low or other extreme working conditions, so that the problem of liquid slugging of the compressor 102 caused by refrigerant liquid entering the compressor 102 can be avoided.

Fig. 2 is a schematic system diagram of the enhanced vapor injection refrigerating system 100 according to one or more embodiments. As shown in Fig. 1 and Fig. 2, this application does not limit the specific flow directions of the refrigerant in the economizer primary side 1071 and the economizer secondary side 1072, and in the enhanced vapor injection refrigerating system 100 shown in Fig. 1, the flow directions of the refrigerant in the economizer primary side 1071 and the economizer secondary side 1072 are the same, or the arrangement of the flow directions of the refrigerant in the economizer primary side 1072 and the economizer secondary side 1072 shown in Fig. 2 are opposite, which should be included in the protection scope of the invention.

In one or more embodiments, the economizer 107 used in the enhanced vapor injection refrigerating system 100 is a plate heat exchanger.

The plate heat exchanger includes a plurality of thin plates with a small gap, and has a larger heat exchange area as compared with other types of heat exchangers, and thus more efficient heat transfer can be achieved. At the same time, a structure of the plate heat exchanger is more compact, a space required for installation is smaller, and the costs are lower. By using the plate heat exchanger to increase the subcooling degree of the refrigerant flowing through the expansion valve 104, a part of the heat exchange requirements in the condenser 103 are met, and a heat exchange area in the condenser 103 is also reduced.

Although the plate heat exchanger is used as the economizer 107 in some embodiments, this application is not limited thereto, and other heat exchangers are used, as long as the refrigerant flowing out of the condenser 103 through the economizer pipeline 106 and the refrigerant flowing out of the condenser 103 through the outlet pipeline of the condenser 103 are set in the economizer 107 to complete heat exchange, which should be included in the protection scope of the invention.

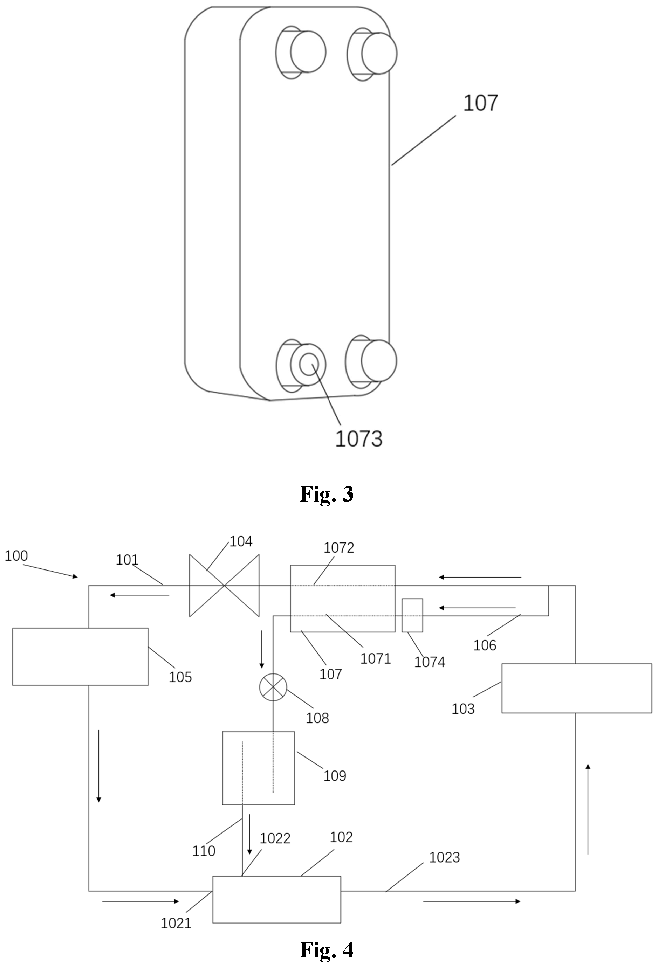

Fig. 3 is a schematic structural diagram of the economizer 107 according to one or more embodiments. Referring to Fig. 3, in one or more embodiments, the enhanced vapor injection refrigerating system 100 further includes an internal throttle hole 1073 internally disposed at an inlet of the primary side of the economizer 107 and integrally formed with the inlet of the primary side of the economizer 107.

Specifically, part of the high-pressure refrigerant flowing out from the outlet of the condenser 103 enters the inlet of the primary side of the economizer 107 through the internal throttle hole 1073, so that the part of the high-pressure refrigerant flowing out from the outlet of the condenser 103 is throttled and expanded through the internal throttle hole 1073 before entering the economizer primary side 1071, the pressure and temperature of the refrigerant after passing through the internal throttle hole 1073 are further reduced, and part of the vapor is generated, the gas-liquid two-phase refrigerant throttled through the internal throttle hole 1073 enters the economizer primary side 1071, and exchanges heat with the unthrottled high-pressure refrigerant on the economizer secondary side 1072, so that the temperature of the refrigerant in the economizer primary side 1071 is increased, and the refrigerant is evaporated into low-pressure gaseous refrigerant. At the same time, a temperature of the refrigerant in the economizer secondary side 1072 is further reduced, and the subcooling degree is increased, thereby improving the heat exchange efficiency of the evaporator 105.

The internal throttle hole 1073 according to some embodiments is internally disposed at the inlet of the primary side of the economizer 107, and is integrally formed with the inlet of the primary side of the economizer 107. Therefore, it is not necessary to provide an electronic expansion valve at the inlet of the economizer 107 to throttle the liquid refrigerant entering the economizer primary side 1071. In addition, the internal throttle hole 1073 according to some embodiments is integrally formed with the inlet of the primary side of the economizer 107, and can complete processing at the same time when the economizer 107 is processed and manufactured, thereby reducing costs. In addition, the internal throttle hole 1073 is not a movable component, and there is no case where maintenance and replacement are required when an electronic expansion valve of the movable component fails, which effectively reduces the manufacturing and maintenance costs.

Fig. 4 is a schematic system diagram of the enhanced vapor injection refrigerating system according to one or more embodiments. Referring to Fig. 4, in other embodiments, the enhanced vapor injection refrigerating system 100 further includes an external throttle device 1074, and the external throttle device 1074 is externally disposed at an inlet of the economizer primary side 1071. Specifically, the external throttle device 1074 may be a component with a throttle hole and threads, and is mounted and fixed at the inlet of the economizer primary side 1071 in the form of screwing into the inlet of the economizer primary side 1071 through threads. In the enhanced vapor injection refrigerating system 100 according to some embodiments, the inlet of the economizer 107 does not need to be specially machined to form the throttle hole, but the existing standard plate heat exchanger can be used as the economizer 107, and only one external throttle device 1074 needs to be additionally disposed at the inlet of the economizer primary side 1071, so that the above effect can be achieved at a lower cost.

In the above embodiments, although the external throttle device 1074 is described in the form of being screwed into the inlet of the economizer primary side 1071 through threads, this application is not limited thereto, and as long as a component can be additionally fixed at the inlet of the economizer primary side 1071 and form a throttling effect, all fall within the protection scope of the invention.

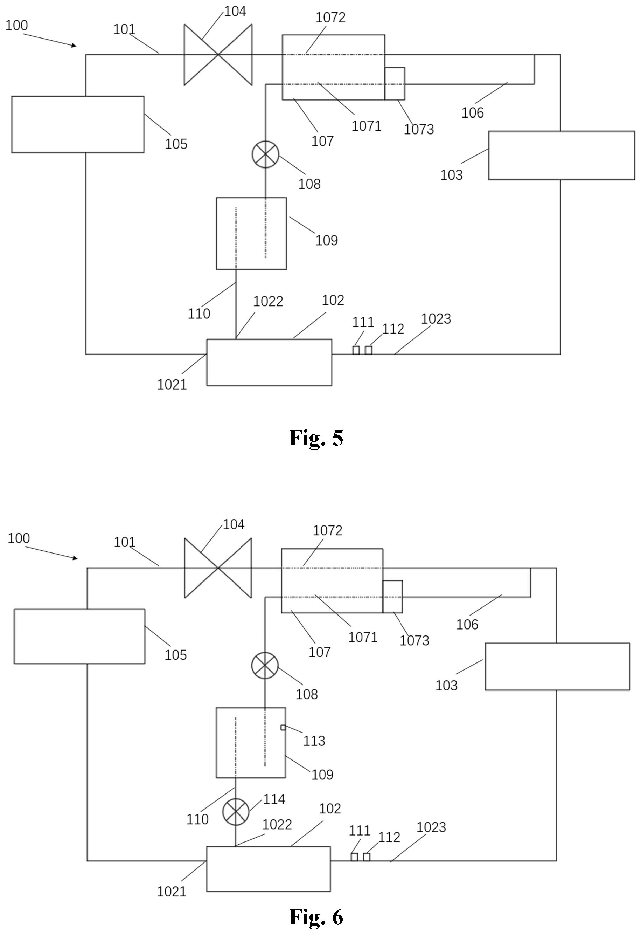

Fig. 5 is a schematic system diagram of the enhanced vapor injection refrigerating system 100 according to one or more embodiments. As shown in Fig. 5, in one or more embodiments, the stop valve 108 in the enhanced vapor injection refrigerating system 100 is a solenoid valve or an electric regulating valve, so that the on-off of the outlet pipeline of the economizer primary side 1071 is controlled by the solenoid valve, or a refrigerant flow at the outlet of the economizer primary side 1071 is controlled by adjusting an opening degree of the electric regulating valve.

In one or more embodiments, the enhanced vapor injection refrigerating system 100 further includes: a temperature sensor 111 disposed on a compressor discharge pipeline 1023 and used to monitor a discharge temperature of the compressor 102; and a pressure sensor 112 disposed on the compressor discharge pipeline 1023 corresponding to the temperature sensor 111 and used to monitor a discharge pressure of the compressor 102.

In the enhanced vapor injection refrigerating system 100 according to the above embodiments, the temperature sensor 111 detects the discharge temperature of the compressor 102 in real time, the pressure sensor 112 monitors the discharge pressure of the compressor 102 in real time, and calculates a discharge superheat degree of the compressor 102 according to the discharge temperature of the compressor 102 and the discharge pressure of the compressor 102. When the calculated discharge superheat degree of the compressor 102 is lower than a preset value, it is determined that the compressor 102 has the possibility of liquid carryover, and at this time, the outlet pipeline of the economizer primary side 1071 is controlled to be cut off by closing the solenoid valve, or the refrigerant flow at the outlet of the economizer primary side 1071 is reduced by adjusting an opening degree of the electric regulating valve, so as to avoid the problem of liquid slugging of the compressor 102.

Through the above embodiments, the on-off or opening degree of the stop valve 108 is controlled according to the discharge data of the compressor 102 detected and calculated in real time by the temperature sensor 111 and the pressure sensor 112, and the operation condition of the compressor 102 in the enhanced vapor injection refrigerating system 100 can be controlled quickly and conveniently without complex control logic, and the stop valve 108 is controlled quickly to adapt to the operation of the compressor 102, thereby improving the operation stability of the compressor 102 and the enhanced vapor injection refrigerating system 100.

Fig. 6 is a schematic system diagram of the enhanced vapor injection refrigerating system 100 according to one or more embodiments. As shown in Fig. 6, in one or more embodiments, the inlet of the vapor injection pipeline 110 is located at an upper part of the gas-liquid separator 109 for extracting the separated vapor refrigerant. The vapor refrigerant will converge to the upper part of the gas-liquid separator 109 relative to the liquid refrigerant, so that the inlet of the vapor injection pipeline 110 is disposed at the upper part of the gas-liquid separator 109, which can ensure that the refrigerant provided to the compressor second suction port 1022 is completely gaseous, so as to avoid possible liquid slugging of the compressor 102.

In one or more embodiments, the enhanced vapor injection refrigerating system 100 further includes a liquid level sensor 113 disposed in the gas-liquid separator 109 and used to monitor a liquid level in the gas-liquid separator 109.

Through the above embodiments, the liquid refrigerant in the gas-liquid separator 109 is deposited at the bottom of the gas-liquid separator 109, and the gaseous refrigerant flows to the compressor second suction port 1022 through the vapor injection pipeline 110 whose inlet is located at the upper part of the gas-liquid separator 109. Without complex control, the gaseous refrigerant and the liquid refrigerant are naturally separated by gravity, and a liquid level of the liquid refrigerant in the gas-liquid separator 109 is monitored in real time by the liquid level sensor 113. When the liquid level sensor 113 detects that the liquid level inside the gas-liquid separator 109 is relatively high, the refrigerant flowing into the gas-liquid separator 109 is throttled by adjusting the on-off or opening degree of the stop valve 108 until the liquid level in the gas-liquid separator 109 decreases below the liquid level sensor 113. Therefore, the problem of liquid slugging of the compressor 102 caused by excessive liquid refrigerant retained in the gas-liquid separator 109, so that part of the liquid refrigerant enters the compressor second suction port 1022 through the inlet of the vapor injection pipeline 110 is avoided.

In one or more embodiments, the enhanced vapor injection refrigerating system 100 further includes an enhanced vapor injection flow control valve 114 disposed in the vapor injection pipeline 110, and an amount of refrigerant vapor injected into the compressor second suction port 1022 is adjusted through the enhanced vapor injection flow control valve 114.

Through the above embodiments, the current operation conditions of the compressor 102 and the enhanced vapor injection refrigerating system 100 can be monitored and controlled according to the temperature sensor 111 and the pressure sensor 112 disposed in the compressor discharge pipeline 1023, or the liquid level sensor 113 disposed in the gas-liquid separator 109, an opening degree of the enhanced vapor injection flow control valve 114 can be controlled according to the detected data, and an amount of refrigerant vapor injected into the compressor second suction port 1022 can be adjusted, so that the problem that the discharge temperature of the compressor 102 is too low or the power consumption of the compressor 102 is too high due to too much refrigerant vapor injected into the compressor second suction port 1022 is avoided, and the problems that the amount of refrigerant vapor injected into the compressor second suction port 1022 is too small, a compression ratio is improved, the discharge temperature of the compressor 102 cannot be effectively reduced, and the operation stability and reliability of the compressor 102 are affected are also avoided.

In one or more embodiments, a refrigerated transport vehicle having the enhanced vapor injection refrigerating system 100 according to any of the above embodiments is also provided.

The enhanced vapor injection refrigerating system 100, the economizer 107, and the internal throttle hole 1073 integrally formed with the economizer 107 according to the above embodiments are not affected by vehicle vibration and environmental exposure, and do not require complex control logic, so that the enhanced vapor injection refrigerating system 100 and the refrigerated transport vehicle have better reliability, reduce the discharge temperature of the compressor 102 more economically and conveniently, and improve the operation stability of the compressor 102.

The above embodiments are merely exemplary embodiments of the invention and are not intended to limit this application. Any modifications, equivalent substitutions, and improvements made in accordance with principles of set out herein shall be included in the protection scope of the invention defined by the appended claims.

## Claims

1. An enhanced vapor injection refrigerating system (100) comprising: a compressor (102), a condenser (103), an expansion valve (104), and an evaporator (105), which are sequentially in communication with each other through a refrigerant pipeline (101), an outlet of the evaporator communicating with a first suction port (1021) of the compressor, the enhanced vapor injection refrigerating system further comprising:
an economizer pipeline (106) branched from the refrigerant pipeline allowing an outlet of the condenser to communicate with the expansion valve;
an economizer (107) having a primary side (1071) disposed on the economizer pipeline and a secondary side (1072) disposed on the refrigerant pipeline allowing the outlet of the condenser to communicate with the expansion valve;
a stop valve (108) disposed on an outlet pipeline of the primary side of the economizer;
a gas-liquid separator (109) having an inlet communicating with the stop valve; and
a vapor injection pipeline (110) allowing an outlet of the gas-liquid separator to communicate with a second suction port (1022) of the compressor.

2. The enhanced vapor injection refrigerating system (100) according to claim 1, wherein
the economizer (107) is a plate heat exchanger.

3. The enhanced vapor injection refrigerating system (100) according to claim 1 or 2, further comprising:
an internal throttle hole (1073) internally disposed at an inlet of the primary side of the economizer and integrally formed with the inlet of the primary side of the economizer.

4. The enhanced vapor injection refrigerating system (100) according to claim 1 or 2, further comprising:
an external throttle device (1074) externally disposed at the inlet of the primary side of the economizer.

5. The enhanced vapor injection refrigerating system (100) according to any preceding claim, wherein the stop valve (108) is a solenoid valve or an electric regulating valve configured to control a refrigerant flow at an outlet of the primary side of the economizer.

6. The enhanced vapor injection refrigerating system (100) according to any preceding claim, further comprising:
a temperature sensor (111) disposed on a discharge pipeline (1023) of the compressor and configured to monitor a discharge temperature of the compressor; and
a pressure sensor (112) disposed on the discharge pipeline of the compressor corresponding to the temperature sensor and configured to monitor a discharge pressure of the compressor.

7. The enhanced vapor injection refrigerating system (100) according to any preceding claim, wherein
the vapor injection pipeline (110) has an inlet located at an upper part of the gas-liquid separator (109), and is configured to extract the separated vapor refrigerant.

8. The enhanced vapor injection refrigerating system (100) according to any preceding claim, further comprising:
a liquid level sensor (113) disposed in the gas-liquid separator and configured to monitor a liquid level in the gas-liquid separator.

9. The enhanced vapor injection refrigerating system (100) according to claim 8, further comprising:
an enhanced vapor injection flow control valve (114) disposed in the vapor injection pipeline (100) and configured to adjust an amount of refrigerant vapor injected into the second suction port (1022) of the compressor.

10. A refrigerated transport vehicle comprising the enhanced vapor injection refrigerating system according to any preceding claim.
